# EUROPÄISCHE PATENTANMELDUNG

(11) **EP 1 661 870 A1**
(43) Veröffentlichungstag der Anmeldung: **31.05.2006**
(21) Anmeldenummer: 05025722.9
(22) Anmeldetag: 25.11.2005
(51) Int. Cl.: C04B 38/08, E04D 11/00

(54) **Einrichtung und ihre Anwendung zur Begrünung von Dach-, Wand- und/oder Bodenflächen sowie Verfahren zu ihrer Herstellung**

(30) Priorität: 29.11.2004 DE 102004058212; 25.04.2005 DE 102005020284; 27.04.2005 DE 102005020288
(71) Anmelder: Conrad Liphard & Söhne GmbH, 37247 Großalmerode (DE)
(72) Erfinder: Liphardt, Dieter, 37247 Grossalmerode (DE)
(74) Vertreter: Freiherr von Schorlemer, Reinfried

(57) **Zusammenfassung**

Es wird eine Einrichtung zur Begrünung von Dach-, Wand- und/oder Bodenflächen beschrieben. Die Einrichtung enthält wenigstens ein plattenförmiges Bauteil (1), das aus einem Gemisch aus einer mineralischen Blähkeramik oder Vulkanasche, einem niedrig sinternden keramischen Bindemittel und Flugasche als Füllstoff durch Trockenpressen und nachfolgendes Sintern hergestellt ist. Das Bauteil kann ohne weitere Vorbehandlung mit einer Bepflanzung (9) versehen werden. Außerdem werden ein Verfahren zur Herstellung der Einrichtung und eine Anwendung der Einrichtung beschrieben (Fig. 2).

## Beschreibung

Die Erfindung betrifft eine Einrichtung und ihre Anwendung zur Begrünung von Dach-, Wand- und/oder Bodenflächen und ein Verfahren zu ihrer Herstellung.

Es ist allgemein bekannt, Dach-, Wand- und Bodenflächen zahlreicher Bauwerke mit wetterbeständigen (Dach-) Bedeckungsmaterialien zu versehen, die z. B. zum Schutz gegenüber Regen und Schnee sowie zur Wärme- und Schallisolierung dienen. Weit verbreitet ist z. B. die Anwendung verschiedener Dachpappen und Wärmedämmplatten. Zur Verbesserung des Aussehens ist es außerdem insbesondere in Verbindung mit Flachdächern bekannt, die zu schützenden Flächen mit einer Bitumen- und Klebschicht zu versehen und auf diese eine Schüttung aus Sand oder Kies aufzubringen. Nachteilig an derartigen Sand- und Kiesschüttungen ist der Umstand, daß sie sich bei Außentemperaturen von mehr als 30 °C und insbesondere bei Sonneneinstrahlung stark aufheizen und selbst Temperaturen von 80 °C bis 90 °C annehmen können. Dadurch können die darunter befindlichen Bitumen- und Klebschichten zumindest lokal schmelzen mit der Folge, daß diese Löcher erhalten und undicht werden. Zur Wärme- und Schallisolierung sind in diesem Zusammenhang auch Formkörper aus expandiertem Blähgraphit oder aus dieses enthaltenden Gemischen bekannt (DE 41 17 077 A1).

Daneben sind auch bereits Einrichtungen der eingangs bezeichneten Gattung vorgeschlagen worden, die auf flache und mäßig geneigte Flächen aufzubringende Bedeckungen in Form von lockeren, ebenfalls als Schüttgüter vorliegenden Substraten enthalten, die aus einer Mischung aus Humuserde und Blähtonkugeln bestehen, und diese Substrate durch Anpflanzung von Grassamen od. dgl. zu begrünen. Während die Humuserde das Wachstum von Grassamen od. dgl. fördern soll, dienen die Blähtonkugeln insbesondere der Gewichtsreduzierung, da Humuserde eine wesentlich größere Dichte als Blähton besitzt. Eine solche Einrichtung bringt neben dem Gewichtsvorteil und dem Vorteil des optisch ansprechenden Aussehens auch den weiteren Vorteil mit sich, daß sie ein großes offenes Porenvolumen besitzt, dadurch ein erhebliches Wasseraufnahmevermögen hat und daher bei hohen Temperaturen kühlend auf darunter liegende Bitumenschichten od. dgl. wirkt. Ein bei Anwendung derartiger Vorrichtungen nicht vermeidbarer Nachteil besteht allerdings darin, daß die lockeren, leichten Blähtonkugeln sich unter dem Einfluß von Wind und Regen lösen, wegfliegen und dadurch in Dachrinnen und Abwasserkanäle gelangen und diese verschmutzen und verstopfen können. Bedeckungen und Isolierungen dieser Art sind daher nicht dauerhaft, was ihre breite Anwendung bisher behindert.

Demgegenüber besteht das technische Problem der vorliegenden Erfindung darin, die Einrichtung der eingangs bezeichneten Gattung so auszubilden, daß sie mechanisch stabil ist, eine dauerhaft gute Isolierung und Abdeckung bewirkt und dennoch ein geringes Gewicht besitzt. Außerdem sollen ein Verfahren zur Herstellung einer solchen Einrichtung und eine Anwendung der Einrichtung vorgeschlagen werden.

Zur Lösung dieses Problems dienen die Merkmale der Ansprüche 1, 16 und 20.

Formteile, die ein Gemisch aus Blähton, Bindemittel und Flugasche enthalten, sind prinzipiell bekannt (z. B. DE 34 03 943 A1, DE 40 37 853 C3). Die bekannten Formteile bestehen jedoch durchweg aus Ziegelsteinen, Rohren zur Herstellung von Schornsteinmänteln od. dgl., d. h. aus zur Errichtung von Bauwerken bestimmten Bauteilen, die eine statische Wirkung haben müssen. Dagegen dienen die erfindungsgemäßen, vorzugsweise plattenförmigen Bauteile nicht zur Erfüllung statischer Aufgaben an einem Bauwerk, sondern zur Herstellung von dauerhaft stabilen Begrünungen insbesondere an Bauwerken und unter Vermeidung der bisher erforderlichen losen Schüttungen und deren Unterkonstruktionen. Überraschend hat sich außerdem ergeben, daß die erfindungsgemäßen Bauteile auch ohne den Zusatz von Humuserde od. dgl. gut als Substrate für Grasanpflanzungen od. dgl. geeignet sind und daß das hohe Porenvolumen dieser Bauteile dazu beiträgt, eine übermäßige Erhitzung von darunter liegenden Bitumenschichten od. dgl. zu vermeiden.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 schematisch die Vorderansicht einer erfindungsgemäßen Einrichtung zur Begrünung von Flächen;
Fig. 2 eine vergrößerte Einzelheit Z der Fig. 1;
Fig. 3 eine Draufsicht auf die Einrichtung der Fig. 1; und
Fig. 4 und 5 je eine Draufsicht und Seitenansicht eines zweiten Ausführungsbeispiels der erfindungsgemäßen Einrichtung.

Eine erfindungsgemäße Einrichtung zur Begrünung von Dach-, Wand- und/oder Bodenflächen besteht bei einem besonders bevorzugten Ausführungsbeispiel aus wenigstens einer Platte oder einem plattenförmigen Bauteil 1, das vorzugsweise im wesentlichen quaderförmig ausgebildet ist und eine Oberseite 2, eine Unterseite 3 und vier seitliche bzw. vordere und hintere Stirnseiten 4 und 5 aufweist, die einander paarweise und im wesentlichen parallel gegenüber stehen.

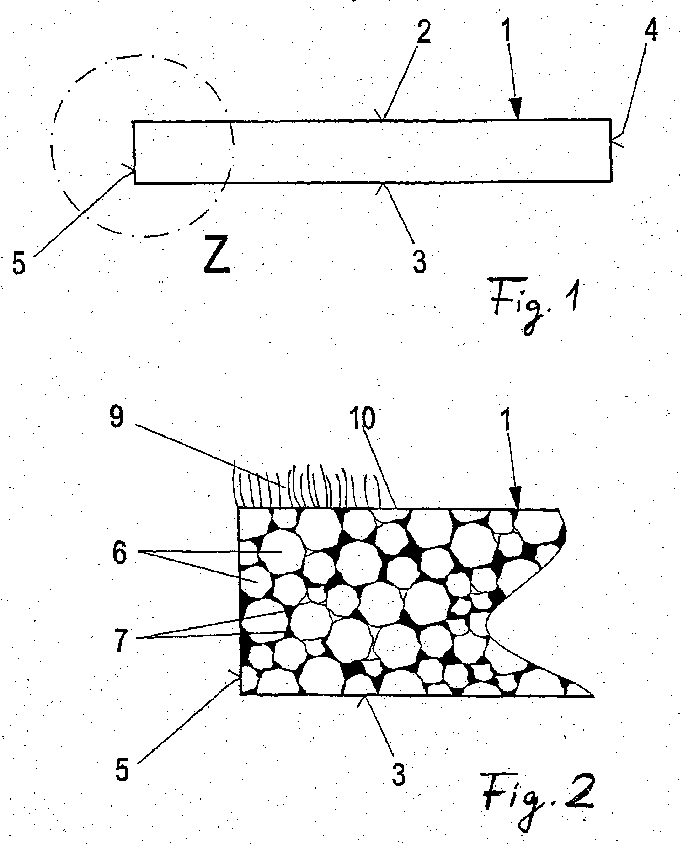

Das plattenförmige Bauteil 1 enthält als Grundmaterial eine feinkörnige Blähkeramik, insbesondere einen Blähton oder Blähschiefer, oder auch Vulkanasche. Das keramische Grundmaterial hat vorzugsweise eine Korngröße von 4 mm bis 8 mm und eine Schüttdichte von z. B. ca. 0,3 g/cm³ bis 0,5 g/cm³. In Fig. 2 sind die aus der Blähkeramik bestehenden Partikel mit dem Bezugszeichen 6 bezeichnet. Die Vulkanasche ist vorzugsweise entsprechend ausgebildet.

Das Bauteil 1 enthält außerdem Flugasche in Form von sog. Mikrokügelchen bzw.
Mikrohohlkügelchen (Cennospheres), die in Fig. 2 durch das Bezugszeichen 7 angedeutet sind und vorzugsweise eine Korngröße von weniger als 0,5 mm aufweisen. Erfindungsgemäß wird allerdings vorzugsweise keine übliche, in Kraftwerken od. dgl., z. B. aus Steinkohle anfallende Flugasche, sondern eine ausgewaschene Flugasche verwendet, die von verschiedenen Verunreinigungen wie z. B. Eisenoxid weitgehend befreit ist und überwiegend SiO₂ und Al₂O₃ enthält. Die Dichte eines derartigen Schüttmaterials beträgt 0,7 g/cm³ bis 0,8 g/cm³, während die durchschnittliche Korngröße z. B. 125 *µ*m bis 140 *µ*m beträgt.

Ein Gemisch aus den Blähkeramik- oder Vulkanasche-Partikeln und den Flugasche-Kügelchen wird durch ein keramisches, niedrig sinterndes Bindemittel, vorzugsweise früh sinternden Ton zusammengehalten, das mit besonderem Vorteil in feinst gemahlener Form verwendet wird und eine Korngröße von z. B. 0 mm bis 0,06 mm aufweist. Wegen ihrer geringen Größe sind die Bindemittelkörner in Fig. 2 nicht gesondert dargestellt. Damit sich das Bindemittel im Freien und insbesondere bei der Einwirkung von Regen nicht auflöst, wird das aus Blähkeramik oder Vulkanasche, Flugasche und Bindemittel bestehende Gemisch zunächst zu plattenförmigen Bauteilen 1 gepreßt, um vorgeformte Preßlinge zu erhalten. Diese Preßlinge werden anschließend einem Sintervorgang in einem Brennofen unterworfen, und zwar bei Temperaturen, die ausreichend weit unterhalb der Schmelztemperaturen der beteiligten Bestandteile liegen. Bei Anwendung eines niedrig sinternden Bindemittels können z. B. Sintertemperaturen von 800 °C bis 950 °C verwendet werden. Dadurch wird das ursprüngliche Gemisch nicht nur zum Bauteil 1 verdichtet, sondern es werden auch Bauteile erhalten, die eine wesentlich größere Festigkeit als die ursprünglichen Preßlinge haben. Insbesondere wird hierbei eine solche Festigkeit der Bauteile 1 angestrebt, daß diese bei einer Dicke von z. B. 65 mm bis 150 mm begehbar sind. Dadurch wird der Vorteil erzielt, daß die erfindungsgemäßen Bauteile 1 im Gegensatz zu Schichten aus herkömmlichen, losen Blähtonkugeln beim Begehen formstabil bleiben.

Durch die Anwendung eines Füllstoffs in Form der Mikrokügelchen ergibt sich der weitere Vorteil, daß das Gesamtgewicht des fertigen Bauteils 1 vergleichsweise klein ist und sich die hohe Dichte des Bindemittels (z. B. ca. 1,8 g/cm³ bis 2,0 g/cm³ für Ton) nicht zu stark bemerkbar macht. Die Dichte des fertigen Bauteils 1 kann dadurch auf ca. 0,7 g/cm³ bis 1,5 g/cm³ eingestellt werden. Zu diesem Zweck wird das Gemisch, aus dem das Bauteil 1 durch Pressen hergestellt wird, vorzugsweise aus 50 bis 80 Gew. % Blähkeramik oder Vulkanasche, 10 bis 30 Gew. % Bindemittel und 5 bis 30 Gew. % Füll- stoff zusammengesetzt.

Nach einer bevorzugten Weiterbildung der Erfindung werden dem Gemisch, aus dem Bauteil 1 hergestellt wird, geringe Mengen an Phosphat oder Borax (z. B. 1 bis 3 Gew. %) zugesetzt, wobei es auch möglich ist, diese Stoffe nur lokal, d. h. in ausgewählten Bereichen des plattenförmigen Bauteils 1 vorzusehen. Dabei wird von dem Gedanken ausgegangen, daß die Zugabe von Phosphat dieselbe Wirkung wie ein Düngemittel hat und das Wachstum von auf das Bauteil 1 aufgebrachten Grassamen od. dgl. fördert, während Borax eine gegenteilige Wirkung hat und das Wachstum von Grassamen od. dgl. hemmt. Dadurch ist es möglich, das Bauteil 1 ganz oder bereichsweise wachstumsfördernd oder wachstumshemmend auszubilden und dadurch bei Bedarf mit Zonen zu versehen, in denen eine Begrünung unerwünscht ist und daher gehemmt wird. In den übrigen Bereichen dagegen hat sich überraschend eine Begrünung auch dann als möglich erwiesen, wenn diese Bereiche ohne Zugabe von Humuserde od. dgl. mit Grassamen od. dgl. bestreut und dann gewässert werden.

Die beschriebene Einrichtung zur Begrünung läßt sich mit plattenförmigen Bauteilen 1 unterschiedlicher Größe realisieren, wobei die Bauteile 1 je nach Größe der zu schützenden Flächen auf Stoß aneinander gelegt werden. Nur beispielhaft werden Bauteile 1 vorgeschlagen, deren Maße Länge/Breite/Dicke z. B. 500 mm/250 mm/65 bis 150 mm betragen.

Die Herstellung der erfindungsgemäßen Einrichtung kann auf die folgende Weise erfolgen:
Es werden zunächst übliche, auf dem Markt erhältliche Blähkeramikkugeln in einem Mischer mit geringen Mengen von Wasser behandelt, um die Oberflächen der Kugeln aufnahmefähig für das Bindemittel zu machen. Das im trockenen Zustand befindliche Bindemittel wird dann ebenfalls dem Mischer zugeführt und mit den Blähkeramikkugeln so vermischt, daß es sich auf deren Oberflächen absetzt. Danach oder gleichzeitig werden dem Mischer auch die Flugasche-Mikrokügelchen und ggf. weitere Zuschlagstoffe wie Phosphat oder Borax zugeführt. Die Vermischung der verschiedenen Substanzen hat dann zur Folge, daß die Blähkeramikkugeln mit einer dünnen, z. B. 0,5 mm bis 1 mm dicken Schicht aus dem Bindemittel und der Flugasche überzogen werden, wobei die Mikrokügelchen der Flugasche eine starke Gewichtsbegrenzung für das Gesamtgemisch bewirken.

Das fertige Gemisch wird dann im trockenen oder noch erdfeuchten Zustand zu wenigstens einem, vorzugsweise massiven, plattenförmigen Bauteil verpreßt, wobei sich Preßdrücke von z. B. 50 kg/cm² bis 400 kg/cm² als zweckmäßig erwiesen haben. Anschließend wird das Bauteil bei z. B. 800 °C bis 950 °C gesintert. Dadurch werden vorfabrizierte Baufertigteile erhalten, die ohne weitere Vorbehandlung angewendet werden können.

Die fertigen, gesinterten Bauteile 1 werden mit ihren Unterseiten 3 und in einem gewünschten Muster auf die begrünenden Flächen aufgelegt und mit üblichen Mitteln an diesen befestigt, wobei die einzelnen Bauteile 1 zweckmäßig mit ihren Stirnflächen 4 und 5 auf Stoß angeordnet werden. Abschließend erfolgt die Aussaat auf ihren Oberflächen 2 und, falls erforderlich, die Bewässerung.

### Beispiel

Es werden 73 Gew. % (380 kg) Blähton oder Blähschiefer mit einer Kornabstufung von 4 mm bis 8 mm, 19 Gew. % (100 kg) Ton (feinst gemahlen, Korngröße 0 mm bis 0,06 mm) und 8 Gew. % (40 kg) Mikrokügelchen (Flugasche) in Form von Microspheres oder Cennospheres in der beschriebenen Weise gemischt. Die Blähtonkugeln werden vorher mit 20 kg bis 70 kg Wasser angefeuchtet. Mit dem fertigen Gemisch werden im trockenen Zustand 250 mm · 250 mm · 150 mm große Platten bzw. plattenförmige Bauteile durch Pressen mit einem Druck von 50 bis 400 kg/cm² hergestellt. Anschließend werden die Bauteile bei 750 °C bis 900 °C im Brennofen gesintert.

Bei Anwendung von Vulkanasche kann auf dieselbe Weise vorgegangen werden.

Die fertigen Bauteile sind begehbar, ohne daß Teilchen absplittern oder Bauteile zu Bruch gehen. Durch Aufbringen von Grassamen und schonende Bewässerung wird ohne weitere Vorkehrungen oder Behandlungen zumindest auf einem Teil eines Bauteils eine Begrünung 9 erhalten, wie sie im linken Teil der Fig. 2 und 3 erkennbar ist. In nicht mit Grassamen versehenen Teilen 10 der Bauteile 1 bleiben deren Oberflächen dagegen ohne Begrünung, wie im rechten Teil der Fig. 2 und 3 dargestellt ist.

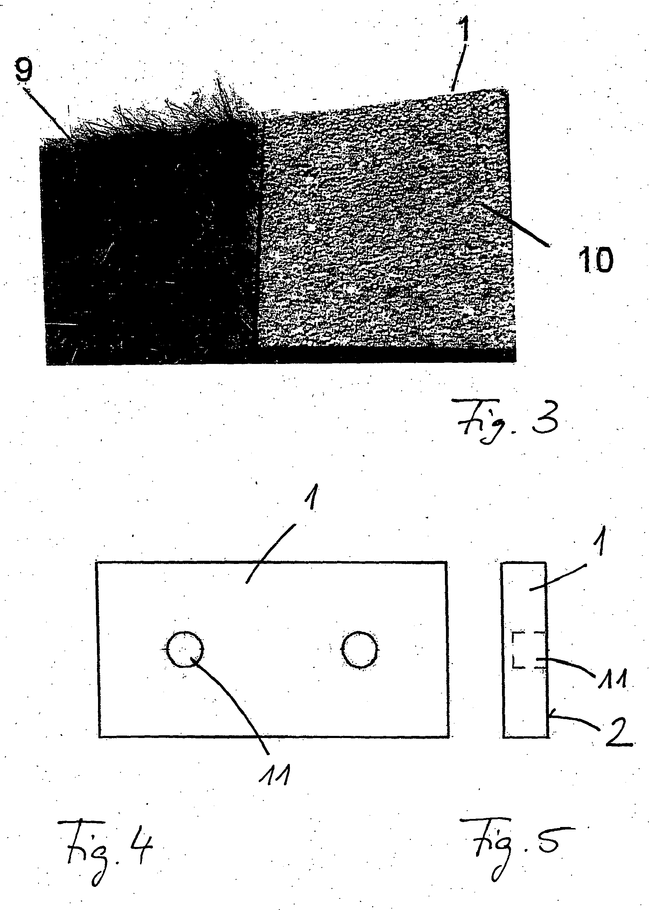

Eine besonders bevorzugte Ausgestaltung des plattenförmigen Bauteils 1 ist in Fig. 4 und 5 dargestellt. Das Bauteil 1 enthält hier wenigstens ein von der Oberseite 2 her eingebrachtes Loch 11 mit kreisrundem Innenquerschnitt. Dieses Loch 11 ist vorzugsweise als Sackloch ausgebildet, wie Fig. 5 zeigt, und mit einer Tiefe in das Bauteil 1 eingebracht, die z. B. etwa zwei Dritteln der Dicke des Bauteils 1 entspricht. Anstelle der beiden kreisrunden Löcher 11 nach Fig. 4 können auch mehr oder weniger Löcher bzw. Aussparungen 11 mit anderen Innenkonturen vorgesehen sein, beispielsweise solche mit eckigen (z. B. quadratischen, rechteckigen oder hexagonalen), sternförmigen, ovalen oder sonstigen Querschnitten, wobei diese Querschnitte auch innerhalb eines und desselben Bauteils 1 in beliebiger Weise kombiniert werden können.

Die Löcher 11 dienen beispielsweise der Bepflanzung mit besonderen Dachbegrünungspflanzen, Steingartengewächsen od. dgl., wobei die Löcher 11 zusätzlich ganz oder teilweise mit Erde gefüllt sein bzw. die Pflanzen zusammen mit Erde in sie eingepflanzt werden können. Etwa sich ansammelndes Wasser kann aufgrund der Porosität des Bauteils 1 aus den Löchern 11 abfließen. Denkbar wäre auch, in die Löcher 11 bereits bepflanzte, entsprechende Außenkonturen aufweisende Blumentöpfe einzusetzen, wodurch deren Verrutschen bei Wind und Sturm vermieden wird. Die Lage, Anordnung und Ausrichtung der Löcher 11 können in Abhängigkeit vom Einzelfall beliebig gewählt werden.

Die Herstellung der Löcher 11 wird durch entsprechende Formgebung der Preßwerkzeuge oder auch nach der Fertigstellung der Bauteile 1 durch Bohren vorgenommen. Die Herstellungsart ist weitgehend frei wählbar.

Durch die Erfindung werden mehrere Vorteile erzielt. Neben der Schaffung eines begehbaren Baufertigteils, das auch bei wechselhaftem Wetter dauerhaft erhalten bleibt, wird z. B. der Vorteil erzielt, daß an der Baustelle keine umständlichen Arbeiten erforderlich sind, wie dies bei Anwendung loser Schüttungen der Fall wäre. Weiter wird der Vorteil erzielt, daß die Bauteile 1 aufgrund ihrer großen Porosität nicht nur eine hohe Wärmeisolierung bewirken, sondern auch einen hohen Wasseraufnahmeeffekt haben und ca. 30 % bis 40 % ihres Volumens an Wasser aufnehmen können. Ein z. B. 500 mm · 250 mm · 150 mm großes Bauteil mit einem Gesamtvolumen von 18,75 1 kann daher etwa 5,6 bis 7,5 1 Wasser aufnehmen. Das ermöglicht nicht nur eine natürliche Bewässerung der Bepflanzung, sondern hat auch einen günstigen Einfluß auf die meistens aus bitumenhaltigen Dachpappen od. dgl. bestehenden Deckschichten, die unterhalb der Bauteile 1 angeordnet werden. Die bei höheren Temperaturen eintretende Verdunstung des Wassers führt nämlich zu einer Abkühlung der Bauteile aufgrund der Verdunstungskälte mit der Folge, daß die darunter befindlichen Bitumenschichten od. dgl. gekühlt werden. Insbesondere bei hohen Außentemperaturen ist daher die Gefahr eines zonenweisen Aufschmelzens und Undichtwerdens der Bitumenschichten im Vergleich zu bekannten Kiesschichten erheblich reduziert. Durch den Bewuchs mit Gras od. dgl. wird diese Gefahr noch weiter reduziert bzw. die Kühlwirkung noch weiter erhöht.

Die Erfindung ist nicht auf das beschriebene Ausführungsbeispiel beschränkt, das auf vielfache Weise abgewandelt werden könnte. Dies gilt insbesondere für die angegebenen Maße der plattenförmigen Bauteile 1 und die beispielhaft angegebenen Gewichts- bzw. Mischungsverhältnisse der verschiedenen Komponenten. Weiterhin ist klar, daß die Erfindung auch die Anwendung der beschriebenen Bauteile 1 für den speziellen Zweck der Begrünung von Flächen, insbesondere von Dach-, Wand- und/oder Bodenflächen von Gebäuden und anderen Bauwerken umfaßt. Daher können die plattenförmigen Bauteile 1 einerseits andere als die beschriebenen quadratischen oder rechteckigen Umfangskonturen aufweisen und in der Draufsicht rund, oval, hexagonal oder sonstwie geformt sein. Andererseits können anstelle von plattenförmigen Bauteilen auch solche mit anderer Geometrie, insbesondere in Form von großen Blöcken, Halbschalen oder Kugeln hergestellt und in der beschriebenen Weise angewendet werden. Schließlich versteht sich, daß die verschiedenen Merkmale auch in anderen als den beschriebenen und dargestellten Kombinationen angewendet werden können.

## Patentansprüche

1. Verwendung eines durch Trockenpressen eines Gemisches aus
mineralischer Blähkeramik oder Vulkanasche,
einem bei 800 °C bis 950 °C sinternden keramischen
Bindemittel und Flugasche
sowie anschließendes Sintern des verpressten Gemisches hergestellten Bauteils zur Begrünung von Dach-, Wand und/oder Bodenflächen.

2. Verwendung nach Anspruch 1, **dadurch gekennzeichnet, daß** als Blähkeramik Blähton oder Blähschiefer eingesetzt werden.

3. Verwendung nach Anspruch 1 oder 2, **dadurch gekennzeichnet, daß** die Blähkeramik in einer Korngröße von 4 mm bis 8 mm eingesetzt wird.

4. Verwendung nach einem der vorhergehenden Ansprüche, **dadurch gekennzeichnet, daß** als Bindemittel Ton eingesetzt wird.

5. Verwendung nach Anspruch 4, **dadurch gekennzeichnet, daß** der Ton in einer Korngröße bis 0,06 mm eingesetzt wird.

6. Verwendung nach einem der vorhergehenden Ansprüche, **dadurch gekennzeichnet, daß** Flugasche in einer Korngröße von weniger als 0,5 mm eingesetzt wird.

7. Verwendung nach einem der vorhergehenden Ansprüche, **dadurch gekennzeichnet, daß** die Platte aus einem Gemisch hergestellt wurde, das sich aus 50 bis 80 Gew. % Blähkeramik oder Vulkanasche, 10 bis 30 Gew. % Bindemittel und 5 bis 30 Gew. % Flugasche zusammensetzt.

8. Verwendung nach einem der vorhergehenden Ansprüche, **dadurch gekennzeichnet, daß** ein Bauteil verwendet wird, das eine Dicke von 65 mm bis 150 mm aufweist.

9. Verfahren zur Herstellung eines zur Begrünung von Dach-, Wand- und/oder Bodenflächen bestimmten Bauteils (1), **dadurch gekennzeichnet, daß** eine mineralische Blähkeramik oder Vulkanasche, ein bei 800 °C bis 950 °C sinterndes, keramisches Bindemittel und Flugasche miteinander vermischt, das Gemisch durch Trockenpressen mit einem Druck von 50 kg/cm² bis 400 kg/cm² zu dem Bauteil (1) verpreßt und das Bauteil (1) dann bei 800 °C bis 950 °C gesintert wird.

10. Verfahren nach Anspruch 9, **dadurch gekennzeichnet, daß** zunächst das Gemisch **dadurch** hergestellt wird, daß Blähkeramik- oder Vulkanasche-Partikel mit einer Korngröße von 4 mm bis 8 mm an ihrer Oberfläche mit Wasser benetzt und danach in einem Mischer mit dem in trockenem Zustand befindlichen Bindemittel und gleichzeitig oder danach mit der Flugasche vermischt werden, und daß das Gemisch dann in trockenem oder erdfeuchtem Zustand zu dem Bauteil (1) gepreßt wird.

11. Einrichtung zur Begrünung von Dach-, Wand- und/oder Bodenflächen, **dadurch gekennzeichnet, daß** sie aus wenigstens einem Bauteil (1) besteht, das aus einem Gemisch aus einer mineralischen Blähkeramik oder Vulkanasche, einem niedrig sinternden, keramischen Bindemittel und Flugasche als Füllstoff durch Trockenpressen und nachfolgendes Sintern hergestellt ist.

12. Einrichtung nach Anspruch 11, **dadurch gekennzeichnet, daß** das Bauteil (1) Blähton oder Blähschiefer als Blähkeramik enthält.

13. Einrichtung nach Anspruch 11 oder 12, **dadurch gekennzeichnet, daß** das Bauteil (1) eine Blähkeramik mit einer Korngröße von 4 mm bis 8 mm enthält.

14. Einrichtung nach einem der Ansprüche 11 bis 13, **dadurch gekennzeichnet, daß** das Bauteil (1) einen niedrig sinternden Ton als Bindemittel enthält.

15. Einrichtung nach Anspruch 14, **dadurch gekennzeichnet, daß** das Bauteil (1) ein Bindemittel mit einer Korngröße von 0 mm bis 0,06 mm enthält.

16. Einrichtung nach einem der Ansprüche 11 bis 15, **dadurch gekennzeichnet, daß** das Bauteil (1) mit einem Füllstoff aus einer ausgewaschenen, im wesentlichen nur Aluminiumsilikat enthaltenden Flugasche versehen ist.

17. Einrichtung nach Anspruch 16, **dadurch gekennzeichnet, daß** das Bauteil (1) einen Füllstoff in Form von mineralischen Mikrokügelchen mit einer Korngröße von 0 mm bis 0,5 mm enthält.

18. Einrichtung nach einem der Ansprüche 11 bis 17, **dadurch gekennzeichnet, daß** das Bauteil (1) 50 bis 80 Gew. % Blähkeramik, 10 bis 30 Gew. % Bindemittel und 5 bis 30 Gew. % Füllstoff enthält.

19. Einrichtung nach einem der Ansprüche 11 bis 18, **dadurch gekennzeichnet, daß** das Bauteil (1) ein plattenförmiges Bauteil ist und eine Dicke von 65 mm bis 150 mm aufweist.

20. Einrichtung nach einem der Ansprüche 11 bis 19, **dadurch gekennzeichnet, daß** das Bauteil (1) aus einem massiven Körper besteht.

21. Einrichtung nach einem der Ansprüche 11 bis 20, **dadurch gekennzeichnet, daß** das Bauteil (1) aus einem vorfabrizierten Baufertigteil besteht.

22. Einrichtung nach einem der Ansprüche 11 bis 21, **dadurch gekennzeichnet, daß** das Bauteil (1) zusätzlich mit einem Phosphat angereichert ist.

23. Einrichtung nach einem der Ansprüche 11 bis 22, **dadurch gekennzeichnet, daß** das Bauteil (1) zumindest in vorgewählten Abschnitten zusätzlich mit Borax angereichert ist.

24. Einrichtung nach einem der Ansprüche 11 bis 23, **dadurch gekennzeichnet, daß** das Bauteil (1) mit wenigstens einem, von einer Oberseite (2) her eingearbeiteten Loch (11) versehen ist.

25. Einrichtung nach Anspruch 24, **dadurch gekennzeichnet, daß** das Loch (11) als Sackloch ausgebildet ist.
